# EUROPÄISCHE PATENTSCHRIFT

(11) **EP 1 639 528 B1**
(45) Veröffentlichungstag und Bekanntmachung des Hinweises auf die Patenterteilung: **07.12.2016**
(21) Anmeldenummer: 04763000.9
(22) Anmeldetag: 15.06.2004
(51) Int. Cl.: G06K 19/077

(54) **VERFAHREN ZUM FIXIEREN EINER BESCHICHTUNG AUF EINEM TRÄGERBAND**
METHOD FOR FIXING A COATING TO A CARRIER STRIP
PROCEDE POUR FIXER UN REVETEMENT SUR UNE BANDE SUPPORT

(30) Priorität: 18.06.2003 DE 10327746
(43) Veröffentlichungstag der Anmeldung: 29.03.2006
(73) Patentinhaber: Giesecke & Devrient GmbH, 81677 München (DE)
(72) Erfinder: DRESCHER, Georg, 2410 Hainburg a.d. Donau (AT); ROEBEN, Hubert, 81669 München (DE); GRIESMEIER, Robert, 83052 Bruckmühl (DE)
(86) Internationale Anmeldenummer: PCT/EP2004/006444
(87) Internationale Veröffentlichungsnummer: WO 2004/111925

(56) Entgegenhaltungen:
- DE-A- 19 929 912
- US-A- 4 897 534

## Beschreibung

Die Erfindung betrifft ein Verfahren zum Fixieren einer Beschichtung auf einem mit Chipmodulen bestückten Trägerband. Weiterhin betrifft die Erfindung eine Laminierpresse zum Herstellen eines Verbunds zwischen einer Beschichtung und einem mit Chipmodulen bestückten Trägerband.

Wie beispielsweise in dem Lehrbuch "Vom Plastik zur Chipkarte", Haghiri/Tarantino, ISBN 3-446-21249-3, Seiten 170 bis 175 beschrieben, können bei der Herstellung von Chipkarten die für die Bestückung der Chipkarten benötigten Chipmodule mit Hilfe eines Trägerbands dem Produktionsprozess zugeführt werden. Da es in der Regel vorgesehen ist, die Chipmodule mit den Kartenkörpern der Chipkarten zu verkleben, wird auf das Trägerband und damit insbesondere auch auf die Chipmodule eine Klebstoffbeschichtung aufgebracht. Dabei hat es sich besonders bewährt, ein thermoaktivierbares Klebeband einzusetzen. Dieses Klebeband wird unter Einwirkung von Druck und Hitze mit dem Trägerband verbunden. Im Rahmen der Chipkartenproduktion werden die Chipmodule inklusive Klebstoffbeschichtung aus dem Trägerband ausgestanzt und unter Einwirkung von Druck und Hitze in die dafür vorgesehenen Aussparungen der Kartenkörper eingeklebt. Mit dieser Technik lässt sich eine zuverlässige und dauerhafte Fixierung der Chipmodule am jeweiligen Kartenkörper erzielen. Allerdings können mitunter Probleme bei der Herstellung des Verbunds zwischen dem Klebeband und dem Trägerband auftreten. Hierfür werden üblicherweise Laminierpressen eingesetzt, bei denen das Klebeband und das Trägerband mittels zweier Metallplatten gegeneinander gepresst und dabei gleichzeitig erwärmt werden.

Im Vorfeld der Erfindung wurde festgestellt, dass etwaige Unebenheiten des Trägerbands dazu führen können, dass kein ordnungsgemäßer Verbund zwischen dem Klebeband und dem Trägerband ausgebildet wird und dadurch Schwierigkeiten beim späteren Handling der ausgestanzten Chipmodule auftreten können. Derartige Unebenheiten können beispielsweise im Bereich der Stoßstellen auftreten, an denen das Trägerband zusammengesetzt ist. Die dort aufgebrachte Verbindungsfolie, welche die beiden Teile des Trägerbands miteinander verbindet, hat zur Folge, dass das Trägerband an dieser Stelle etwas dicker ist.

Aus der DE 199 29 912 A1 ist es bekannt, zur Herstellung einer dauerhaften Verbindung zwischen einer Beschichtung und einem Trägerband eine Andruckfläche aus einem elastischen Material vorzusehen. Bei der Verbindung handelt es sich jedoch um eine Klebeschicht.

Der Erfindung liegt die Aufgabe zugrunde, auf ein mit Chipmodulen bestücktes Trägerband eine möglichst gleich bleibend gut haftende Beschichtung aufzubringen.

Diese Aufgabe wird durch ein Verfahren mit der Merkmalskombination des Anspruchs 1 gelöst.

Beim erfindungsgemäßen Verfahren zum Fixieren einer Beschichtung auf einem mit Chipmodulen bestückten Trägerband werden die Beschichtung und das Trägerband zusammengeführt und zwischen einem ersten Werkzeug und einem zweiten Werkzeug angeordnet. Weiterhin werden die Beschichtung und das Trägerband mit den beiden Werkzeugen gegeneinander gepresst. Das zweite Werkzeug passt sich beim Pressvorgang an die Topographie der am zweiten Werkzeug anliegende Oberfläche an.

Das erfindungsgemäße Verfahren zeichnet sich dadurch aus, dass das Trägerband und/oder die Beschichtung beim Pressvorgang erwämt werden.

Das erfindungsgemäße Verfahren hat den Vorteil, dass sich damit auch dann ein vollflächiger Verbund zwischen der Beschichtung und dem Trägerband herstellen lässt, wenn Unebenheiten vorhanden sind. Somit besteht allenfalls ein sehr geringes Risiko, dass sich die mit dem erfindungsgemäßen Verfahren auf dem Trägerband fixierte Beschichtung bei der Weiterverarbeitung des Trägerbands wieder ablöst.

Im Rahmen des erfindungsgemäßen Verfahrens kann zwischen dem zweiten Werkzeug und der daran anliegenden Oberfläche im Wesentlichen vollflächig ein gleichmäßiger Druck übertragen werden. Dies hat den Vorteil, dass der Verbund zwischen der Beschichtung und dem Trägerband sehr gleichmäßig ausgebildet wird und damit insbesondere auch sehr widerstandsfähig gegen ein partielles Ablösen der Beschichtung ist.

In einem bevorzugen Ausführungsbeispiel wird die Anpassung des zweiten Werkzeugs an die daran anliegende Oberfläche mit Hilfe eines Einsatzes aus einem nachgiebigen Material durchgeführt. Der Einsatz kann dabei so ausgebildet sein, dass er auf die potentiell auftretenden Unebenheiten des Trägerbands optimal abgestimmt ist und kann erforderlichenfalls gegen einen anderen Einsatz ausgetauscht werden. Ein derartiger Austausch des Einsatzes kann insbesondere auch zum Justieren der beiden Werkzeuge vorgenommen werden. In diesem Fall wird der Einsatz aus dem nachgiebigen Material gegen ein starres Teil, vorzugsweise ein Metallteil, ausgetauscht. Dadurch kann die Justage stark vereinfacht werden und es kann eine hohe Genauigkeit erzielt werden.

In der Regel werden das Trägerband und/ oder die Beschichtung beim Pressvorgang erwärmt, um den Verbund herzustellen, wobei als Beschichtung insbesondere eine thermoaktivierbare Klebefolie zum Einsatz kommt. Auf diese Weise lässt sich die Beschichtung schnell und zuverlässig am Trägerband fixieren.

Die Erfindung betrifft weiterhin eine Laminierpresse zum Herstellen eines Verbunds zwischen einer Beschichtung und einem mit Chipmodulen bestückten Trägerband. Die erfindungsgemäße Laminierpresse weist ein erstes Werkzeug und ein zweites Werkzeug mit einander gegenüberliegenden Arbeitsflächen zum Ausüben eines Drucks auf die Beschichtung und das Trägerband auf. Die erfindungsgemäße Laminierpresse zeichnet sich dadurch aus, dass die Arbeitsfläche des zweiten Werkzeugs aus einem nachgiebigen Material besteht.

Bei dem nachgiebigen Material kann es sich um ein Elastomermaterial, insbesondere um ein Silikongummimaterial handeln. Ein derartiges Material hat den Vorteil, dass es sich einerseits sehr gut einer vorgegebenen Topographie anpassen kann und andererseits bis zu einem gewissen Grad hitzebeständig ist. Ein weiterer Vorteil besteht darin, dass das Material elastisch zurückfedert und damit jeweils wieder seine ursprüngliche Form annimmt. Weiterhin ist es vorteilhaft, wenn das nachgiebige Material als ein auf einer starren Unterlage angeordneter Einsatz ausgebildet ist. Die starre Unterlage erleichtert das Aufnehmen oder das Einleiten eines Druckes. Vorzugsweise ist der Einsatz mit der Unterlage lösbar verbunden, um bei Verschleiß oder aus anderen Gründen einen problemlosen Austausch zu ermöglichen.

Um trotz der Verwendung des nachgiebigen Materials für die Arbeitsfläche des zweiten Werkzeugs noch eine gewisse Stabilität und Präzision der erfindungsgemäßen Laminierpresse zu gewährleisten, ist die Arbeitsfläche des ersten Werkzeugs vorzugsweise starr ausgebildet.

Die Erfindung wird nachstehend anhand des in der Zeichnung dargestellten Ausführungsbeispiels erläutert.

Es zeigen:
- Fig. 1: eine Momentaufnahme eines Ausführungsbeispiels einer erfindungsgemäß ausgebildeten Laminierpresse während der Durchführung des erfindungsgemäßen Verfahrens in einer stark vereinfachten Schnittdarstellung und
- Fig. 2: eine weitere Momentaufnahme in einer Fig. 1 entsprechenden Darstellung.

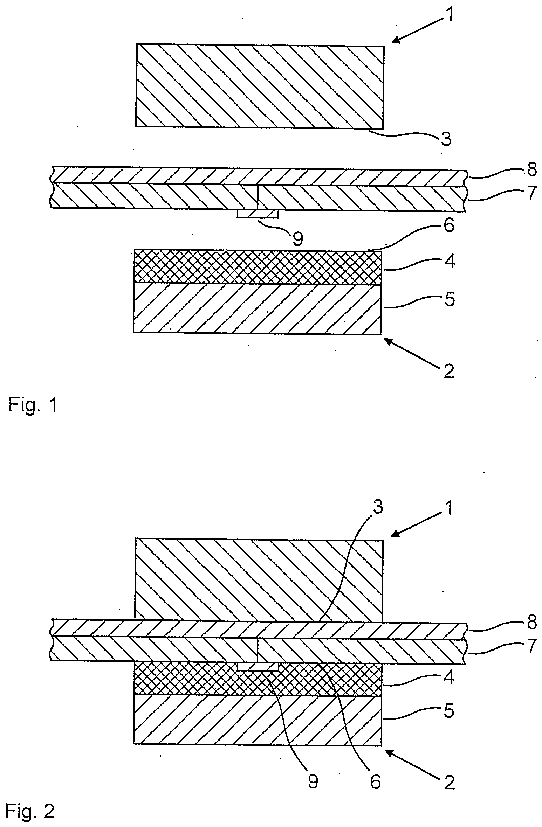

Fig. 1 zeigt eine Momentaufnahme des erfindungsgemäßen Verfahrens. Abgebildet sind einige Komponenten eines Ausführungsbeispiels einer erfindungsgemäß ausgebildeten Laminierpresse in einer stark vereinfachten Schnittdarstellung. Die Laminierpresse weist ein Oberwerkzeug 1 und ein Unterwerkzeug 2 auf. Das Oberwerkzeug 1 ist als eine Metallplatte ausgebildet und weist eine obere Arbeitsfläche 3 auf. Das Unterwerkzeug 2 verfügt über einen Einsatz 4 aus flexiblem Silikongummi, der auf einer starren Unterlage 5 lösbar befestigt ist und die dem Oberwerkzeug 1 zugewandt Seite des Unterwerkzeugs 2 auskleidet. Durch die der oberen Arbeitsfläche 3 zugewandte Seite des Einsatzes 4 wird eine untere Arbeitsfläche 6 ausgebildet, d. h. die obere Arbeitsfläche 3 und die untere Arbeitsfläche 6 liegen einander planparallel gegenüber. Zwischen den beiden Arbeitsflächen 3 und 6 ist ein mit Chipmodulen bestücktes Trägerband 7 angeordnet, auf dem ein thermoaktivierbares Klebeband 8 aufliegt. Aus Gründen der besseren Übersicht sind die Chipmodule des Trägerbands 7 nicht eigens dargestellt. Ebenso ist auch der Mechanismus, der das Trägerband 7 und das Klebeband 8 zusammenführt, nicht dargestellt. In dem dargestellten Ausschnitt ist das Trägerband 7 entlang seiner Längserstreckung aus zwei Teilen zusammengesetzt, die durch eine Verbindungsfolie 9, beispielsweise in Form eines Klebestreifens, miteinander verbunden sind. Die Verbindungsfolie 9 steht geringfügig über die Oberfläche des Trägerbands 7 über, so dass das Trägerband 7 im Bereich der Verbindungsstelle eine lokale Verdickung aufweist. Neben der dargestellten Verbindungsstelle können beim Trägerband 7 noch weitere Verbindungsstellen vorhanden sein. Auch das thermoaktivierbare Klebeband 8 kann Verbindungsstellen aufweisen, die zu einer lokalen Verdickung führen.

Um einen Verbund zwischen dem Trägerband 7 und dem Klebeband 8 herzustellen, werden die obere Arbeitsfläche 3 des Oberwerkzeugs 1 und die untere Arbeitsfläche 6 des Unterwerkzeugs 2 einander angenähert und dabei das Trägerband 7 und das Klebeband 8 gegeneinander gepresst. Dies ist in Fig. 2 dargestellt.

Fig. 2 zeigt eine weitere Momentaufnahme in einer Fig. 1 entsprechenden Darstellung. Zu dem in Fig. 2 dargestellten Zeitpunkt werden das Trägerband 7 und das Klebeband 8 mit der oberen Arbeitsfläche 3 des Oberwerkzeugs 1 und der unteren Arbeitsfläche 6 des Unterwerkzeugs 2 gegeneinander gepresst und dabei gleichzeitig erwärmt, um das Klebeband 8 zu aktivieren. Dabei liegen die obere Arbeitsfläche 3 des Oberwerkzeugs 1 am Klebeband 8 und die untere Arbeitsfläche 6 des Unterwerkzeugs 2 am Trägerband 7 an. Da die obere Arbeitsfläche 3 durch die Metallplatte des Oberwerkzeugs 1 gebildet wird, weist die obere Arbeitsfläche 3 eine ebene Form auf, die sich während des Pressvorgangs kaum verändert. Folglich ist auch die während des Pressvorgangs zwischen dem Oberwerkzeug 1 und dem Klebeband 8 bestehende Kontaktfläche eben ausgebildet.

Im Bereich des Unterwerkzeugs 2 liegt eine völlig andere Situation vor. Der Einsatz 4 gibt im Bereich der über das Trägerband 7 überstehenden Verbindungsfolie 9 nach, so dass sich die untere Arbeitsfläche 6 an das Trägerband 7 inklusive der Verbindungsfolie 9 anschmiegt. Dadurch wird ein nahezu vollflächiger Kontakt zwischen der unteren Arbeitsfläche 6 und dem Trägerband 7 inklusive der Verbindungsfolie 9 ausgebildet, d. h. das Trägerband 7 wird durch die untere Arbeitsfläche 6 nahezu vollflächig unterstützt. Allenfalls unmittelbar neben der Verbindungsfolie 9 kann ein kleiner Freiraum zwischen der unteren Arbeitsfläche 6 und der Trägerfolie 7 verbleiben, der in Fig. 2 allerdings nicht dargestellt ist. Dies hat wiederum zur Folge, dass das Trägerband 7 und das Klebeband 8 im Wesentlichen vollflächig gegeneinander gepresst werden und somit vollflächig miteinander verbunden werden. Dadurch wird im Gegensatz zur Unterstützung des Trägerbands 7 mit einer starren Komponente insbesondere auch in der Umgebung der Verbindungsfolie 9 ein Verbund zwischen dem Trägerband 7 und dem Klebeband 8 hergestellt. Ausgenommen ist allenfalls ein vernachlässigbarer Bereich unmittelbar neben der Verbindungsfolie 9. Die Verformbarkeit des Einsatzes 4 ermöglicht es somit, dass die untere Arbeitsfläche 6 während des Pressvorgangs von einer durchgehend ebenen Form abweicht und dementsprechend eine von einer ebenen Form abweichende Kontaktfläche mit dem Trägerband 7 inklusive Verbindungsfolie 9 ausbildet, über die nahezu vollflächig eine Druckeinleitung erfolgen kann. Somit wird auch bei einer Unebenheit des Trägerbands 7 eine nahezu gleichmäßige Flächenpressung zwischen dem Trägerband 7 und dem Klebeband 8 erzeugt.

Nachdem in dem von der oberen Arbeitsfläche 3 des Oberwerkzeugs 1 und der unteren Arbeitsfläche 6 des Unterwerkzeugs 2 überdeckten Bereich ein Verbund zwischen dem Trägerband 7 und dem Klebeband 8 hergestellt wurde, werden die obere Arbeitsfläche 3 und die untere Arbeitsfläche 6 wieder soweit voneinander entfernt, dass das Trägerband 7 und das Klebeband 8 weitertransportiert werden können. Nach einem Vorschub des Trägerbands 7 und des Klebebands 8 um eine Distanz, die dem von der oberen Arbeitsfläche 3 und der unteren Arbeitsfläche 6 überdeckten Bereich entspricht, werden die obere Arbeitsfläche 3 und die untere Arbeitsfläche 6 wieder einander angenähert und damit ein weiterer Pressvorgang eingeleitet.

Im entlasteten Zustand nimmt die untere Arbeitsfläche 6 des Unterwerkzeugs 2 jeweils wieder im Wesentlichen ihre ursprüngliche Form an. Allerdings ist die untere Arbeitsfläche 6 auch dann nicht exakt eben ausgebildet, so dass sich die untere Arbeitsfläche 6 nicht sonderlich gut als Referenzfläche zum Justieren des Oberwerkzeugs 1 und des Unterwerkzeugs 2 eignet. Aus diesem Grund ist es im Rahmen des erfindungsgemäßen Verfahrens vorgesehen, den Einsatz 4 für die Durchführung der Justage, durch die beispielsweise die Planparallelität der beiden Arbeitsflächen 3 und 6 eingestellt wird, gegen eine Metallplatte auszutauschen. Sobald die erforderlichen Einstellungen vorgenommen sind, wird die Metallplatte wieder entnommen und durch den Einsatz 4 ersetzt. Ein Austauschen des Einsatzes 4 kann beispielsweise auch dann erfolgen, wenn dieser verschlissen ist. In diesem Fall wird der Einsatz 4 jedoch nicht durch die Metallplatte, sondern durch einen neuen Einsatz 4 ersetzt. Ebenso kann der Einsatz 4 ausgetauscht werden, um Anpassungen am Produktionsprozess vorzunehmen.

Im Folgenden werden weitere Details der Ausführungsform gemäß Figur 1 und 2 näher beschrieben

Der Einsatz 4 wird vorzugsweise aus einem Material gebildet, welches eine Härte zwischen 50 und 85 Shore A aufweist. Grundsätzlich wäre der Effekt eines Ausgleichens von Unebenheiten auch bei geringeren Härtegraden erzielbar. Jedoch kann eine hohe beziehungsweise gegenüber der Verwendung einer Metallplatte gesteigerte Produktionsgeschwindigkeit nur bei ausreichend geringer Bauhöhe des Einsatzes 4 und in dem angegebenen Härtebereich erzielt werden.

Die Härte des Einsatzes 4 ist insbesondere so gewählt, daß der Produktionsprozeß in seiner Geschwindigkeit optimiert ist. Die Klebestelle 9 tritt auf dem Trägerband 7 nur alle 1 bis 2 Meter, also nur alle 20-40 Arbeitsschritte, auf. Da zudem im Bereich der Klebestelle 9 mit hoher Wahrscheinlichkeit als defekt markierte Chipmodule vorliegen, wird der Einsatz 4 vorzugsweise so ausgestaltet, daß im Nahbereich der Klebestelle 9 zwischen Trägerband und Beschichtung nicht notwendigerweise eine vollständige Verklebung erzielt wird. Vielmehr werden die Parameter Bauhöhe und Shore-Härte des Einsatzes 4 so gewählt, dass eine vollständige Verklebung erst außerhalb des Nahbereiches der Klebestelle 9, also für Chipmodule erfolgt, die den als defekt markierten Chipmodulen benachbart sind. Als Nahbereich der Klebestelle 9 kann der Rand der Klebestelle 9 plus 2 - 5 mm zu jeder Seite angesehen werden.

Das Oberwerkzeug 1 kann Aussparungen oder durchgehende Öffnungen zur Aufnahme von auf dem Trägerband 7 angeordneten Chipmodulen aufweisen. Insbesondere können durchgehende Öffnungen in dem Oberwerkzeug 1 als Mittel zur Kühlung der Chipmodule im Rahmen einer Erwärmung von Trägerband 7 und Beschichtung 8 eingesetzt werden.

Der Einsatz 4 kann aus Silikongummi gefertigt sein und eine Bauhöhe von 1 bis 4 mm aufweisen. Vorzugsweise ist der Einsatz 4 ebenfalls mit symmetrisch angeordneten Aussparungen oder durchgehenden Öffnungen versehen. Die Öffnungen können dabei so angeordnet sein, daß sie gegenüber den zum Oberwerkzeug 1 hin angeordneten Chipmodulen liegen.

Für ein typisches herkömmliches Trägerband mit Chipmodulen wird die Bauhöhe bei circa 580 µm liegen. Beispielsweise kann auf dem Trägerband 7 mit der Dicke 165 ± 30 µm ein Chip der Höhe 185 ± 15 µm in einer Vergußmasse aufgenommen sein, so daß die Höhe der Vergußmasse auf dem Trägerband 7 circa 400 µm beträgt. Die Beschichtung 8 bestehend aus einem Träger für den Kleber sowie einer Klebeschicht von 30 bis 60 µm weist eine Höhe von 120 bis 140 µm auf.

Bei einem anderen Modultyp, welches auf der Flip-Chip-Technik basiert (FCOS®), beträgt die Bauhöhe circa 500 µm. Ein Trägerband 7 aus PET mit entsprechender Metallisierung von 105 ± 30 µm trägt einen Chip mit einer Höhe von 330 ±15 µm.

Die Klebestelle 9 weist jeweils eine Höhe von 70 µm auf.

### Bezugszeichenliste

- 1: Oberwerkzeug
- 2: Unterwerkzeug
- 3: untere Arbeitsfläche
- 4: flexibler Einsatz
- 5: starre Unterlage
- 6: obere Arbeitsfläche
- 7: Trägerband
- 8: Klebeband
- 9: Verbindungsfolie

## Patentansprüche

1. Verfahren zum Fixieren einer Beschichtung (8) auf einem mit Chipmodulen bestückten Trägerband (7), wobei die Beschichtung (8) und das Trägerband (7) zusammengeführt und zwischen einem ersten Werkzeug (1) und einem zweiten Werkzeug (2) angeordnet werden und wobei die Beschichtung (8) und das Trägerband (7) mit den beiden Werkzeugen (1, 2) gegeneinander gepresst werden, und sich das zweite Werkzeug (2) beim Pressvorgang an die Topographie der am zweiten Werkzeug (2) anliegenden Oberfläche anpasst, **dadurch gekennzeichnet, dass** das Trägerband (7) und/ oder die Beschichtung (8) beim Pressvorgang erwärmt werden.

2. Verfahren nach Anspruch 1, **dadurch gekennzeichnet, dass** zwischen dem zweiten Werkzeug (2) und der daran anliegenden Oberfläche im Wesentlichen vollflächig ein gleichmäßiger Druck übertragen wird.

3. Verfahren nach einem der vorhergehenden Ansprüche, **dadurch gekennzeichnet, dass** die Anpassung des zweiten Werkzeugs (2) an die daran anliegende Oberfläche mit Hilfe eines Einsatzes (4) aus einem nachgiebigen Material durchgeführt wird.

4. Verfahren nach einem der vorhergehenden Ansprüche, **dadurch gekennzeichnet, dass** zum Justieren der beiden Werkzeuge (1, 2) der Einsatz (4) aus dem nachgiebigen Material gegen ein starres Teil, vorzugsweise ein Metallteil, ausgetauscht wird.

5. Verfahren nach einem der vorhergehenden Ansprüche, **dadurch gekennzeichnet, dass** die Beschichtung (8) in Form einer thermoaktivierbaren Klebefolie aufgebracht wird.

## Claims

1. A method for fixing a coating (8) on a carrier band (7) fitted with chip modules, wherein the coating (8) and the carrier band (7) are joined and arranged between a first tool (1) and a second tool (2) and wherein the coating (8) and the carrier band (7) are pressed against each other with the two tools (1, 2) and the second tool (2) adapts to the topography of the surface adjacent to the second tool (2) during the pressing process, **characterized in that** the carrier band (7) and/or the coating (8) are heated during the pressing process.

2. The method according to claim 1, **characterized in that** in between the second tool (2) and the surface adjacent thereto a uniform pressure is transferred substantially over the full area.

3. The method according to any of the preceding claims, **characterized in that** the adaptation of the second tool (2) to the surface adjacent thereto is carried out with the aid of an insert (4) of a resilient material.

4. The method according to any of the preceding claims, **characterized in that** for adjusting the two tools (1, 2) the insert (4) of the resilient material is replaced by a rigid part, preferably a metal part.

5. The method according to any of the preceding claims, **characterized in that** the coating (8) is applied in the form of a thermoactivatable adhesive foil.

## Revendications

1. Procédé de fixation d'un revêtement (8) sur une bande support (7) garnie de modules puces, le revêtement (8) et la bande support (7) étant accolés et disposés entre un premier outil (1) et un deuxième outil (2), et le revêtement (8) et la bande support (7) étant pressés l'un contre l'autre au moyen des deux outils (1, 2), et le deuxième outil (2) s'adaptant, lors du processus de pressage, à la topographie de la surface en appui sur le deuxième outil (2), **caractérisé en ce que** la bande support (7) et/ou le revêtement (8) sont chauffées lors du processus de pressage.

2. Procédé selon la revendication 1, **caractérisé en ce que**, entre le deuxième outil (2) et la surface en appui sur lui, une pression uniforme est transmise essentiellement à pleine surface.

3. Procédé selon une des revendications précédentes, **caractérisé en ce que** l'adaptation du deuxième outil (2) à la surface en appui sur lui est effectuée à l'aide d'un insert (4) en un matériau souple.

4. Procédé selon une des revendications précédentes, **caractérisé en ce que**, pour l'ajustage des deux outils (1, 2), l'insert (4) en le matériau souple est échangé contre une pièce rigide, de préférence une pièce en métal.

5. Procédé selon une des revendications précédentes, **caractérisé en ce que** le revêtement (8) est appliqué sous forme d'un film adhésif thermoactivable.
